# EUROPÄISCHE PATENTSCHRIFT

(11) **EP 1 240 440 B1**
(45) Veröffentlichungstag und Bekanntmachung des Hinweises auf die Patenterteilung: **02.02.2005**
(21) Anmeldenummer: 00977420.9
(22) Anmeldetag: 20.10.2000
(51) Int. Cl.: F16F 1/36

(54) **VERFAHREN ZUR HERSTELLUNG VON ELASTOMEREN FEDERELEMENTEN**
METHOD FOR PRODUCING ELASTOMERIC ELASTIC ELEMENTS
PROCEDE DE PRODUCTION D'ELEMENTS ELASTIQUES EN ELASTOMERE

(30) Priorität: 11.11.1999 DE 19954197
(43) Veröffentlichungstag der Anmeldung: 18.09.2002
(73) Patentinhaber: ELH Eisenbahnlaufwerke Halle GmbH & Co. KG, 06188 Queis (DE)
(72) Erfinder: MERTENS, Rudi, B-1341 Ceroux-Mousty (BE)
(74) Vertreter: Langmaack, Jürgen
(86) Internationale Anmeldenummer: PCT/EP2000/010333
(87) Internationale Veröffentlichungsnummer: WO 2001/034995

(56) Entgegenhaltungen:
- DE-A- 3 533 435
- GB-A- 2 030 675
- US-A- 5 141 697
- US-A- 5 868 384

## Beschreibung

Aus DE-C-28 44 486 ist ein Verfahren zur Herstellung von elastomeren Federelementen bekannt, bei dem ein Block aus einem thermoplastischen kopolymeren Polyester-Elastomer mit Hilfe von zwei plattenförmigen gegeneinander gerichteten Preßwerkzeugen um wenigstens 30% seiner Höhe zusammengedrückt und zu einer kissenförmigen Platte mit nach außen ausgebauchter Umfangsfläche umgeformt wird. Nach Entlastung erhält man ein Federelement, das bei Belastung sich elastisch verformt und bei der anschließenden Entlastung wieder seine ursprüngliche Form einnimmt, wobei jedoch eine deutliche Hysterese festzustellen ist. Legt man mehrere solcher Federelemente übereinander, so lassen sich Druckpuffer mit guter Federwirkung und deutlicher Dämpfung bilden.

Da derartige scheibenförmige Druckkörper für bestimmte Anwendungsfälle, bei denen eine "weiche" Feder benötigt wird, keine zufriedenstellende Federkennlinie aufweisen und darüber hinaus sich schwierig zu mehrteiligen Federelementen zusammenfassen lassen, wurde als Weiterentwicklung des vorstehend beschriebenen Verfahrens in DE-C-35 33 435 vorgeschlagen, den Block zunächst mit einer durchgehenden Mittenausnehmung in Form einer Bohrung zu versehen. Wird ein derartiger Block dann über die beiden Preßwerkzeuge, wie vorstehend beschrieben, zusammengedrückt, bildet sich wiederum die Ausbauchung der Umfangsfläche, aber auch die Mittenausnehmung erweitert ihren Durchmesser im Bereich der Ausbauchung entsprechend, so daß das durch bleibende Verformung gewonnene Druckfederelement aufgrund der gegebenen Geometrie nach Art einer Federkopplung wirkt, die geringfügig als Druckfeder, überwiegend aber als Biegefeder und bei vollständiger Zusammendrückung wieder als reine, sehr steife Druckfeder wirkt und entsprechend eine Federkennlinie aufweist, die zunächst steil ansteigt, dann im Biegebereich verhältnismäßig flach verläuft und anschließend stark progressiv ansteigt. Wegen des ausgeprägten Biegebereiches weisen diese Federn eine nicht zufriedenstellende Dämpfung auf.

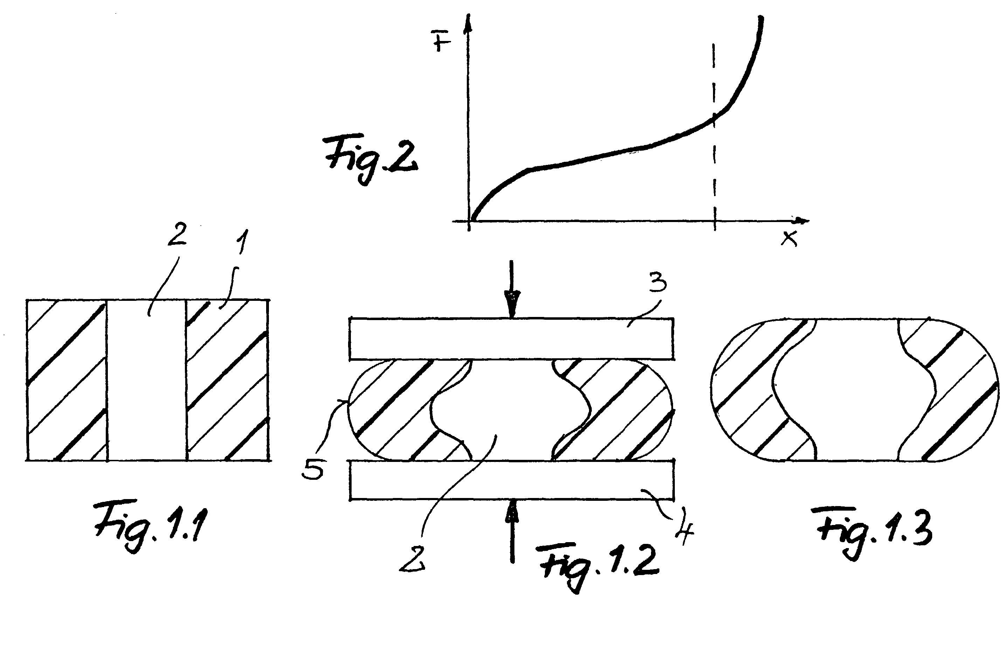

Das Verfahren nach diesem Stand der Technik wird nachstehend anhand der Fig. 1 und 2 erläutert.

Bei dem in Fig. 1 in den einzelnen Verfahrensschritten dargestellten Verfahren nach dem Stand der Technik wird in einem ersten Verfahrensschritt ein zylindrischer Block 1 aus einem thermoplastischen kopolymeren Polyester-Elastomer mit einer Mittenausnehmung 2 in Form einer zylindrischen Bohrung als Grundkörper hergestellt, Fig. 1.1.

Der so vorbereitete Block 1 wird dann im zweiten Verfahrensschritt, Fig. 1.2, zwischen zwei Preßplatten 3 und 4 um mindestens 30% seiner Ausgangshöhe zusammengedrückt, so daß die Außenumfangsfläche 5 nach außen ausgebaucht wird. Die Wandung der Mittenausnehmung 2 wird hierbei entsprechend auch nach außen ausgebogen, so daß sich infolge der bleibenden Verformung des Materials nach dem Zurückfahren der Preßwerkzeuge 3 und 4 die in Fig. 1.3 dargestellte Endform des Federelementes ergibt. Es ist ohne weiteres einzusehen, daß im Belastungsfall das dargestellte fertige Federelement im wesentlichen als Biegefeder wirkt, so daß für die Federauslegung ganz entscheidend die Wanddicke im Bereich der Mittelebene ist. Eine entsprechende Federkennlinie ist in Fig. 2 dargestellt.

Erfindungsgemäß ist vorgesehen ein Verfahren zur Herstellung von elastomeren Federelementen mit den Merkmalen des Anspruchs 1. Das Verfahren macht hierbei von der Eigenschaft dieses Elastomers Gebrauch, sich innerhalb eines gewissen Verformungsbereiches unter Last elastisch zu verformen und sich bei einer Überschreitung einer Belastungsgrenze druckplastisch, d. h. bleibend, zu verformen. Wird ein "überlasteter" Körper wieder entlastet, ist er bei reduzierter Belastung wieder elastisch verformbar und kann als Federelement verwendet werden. Die Umfangsfläche des Grundkörpers wird auch bei dem erfindungsgemäßen Verfahren nach bleibender Verformung nach außen ausgebaucht. Das erfindungsgemäße Verfahren bietet aber den Vorteil, daß durch eine gezielte Formgebung bei der Pressung der so hergestellte Federkörper insgesamt bei Belastung ausschließlich als Druckfeder wirkt und so ein eindeutiger Verlauf der Federkennlinie bei Belastung vorgebbar ist, andererseits aber bei einer Entlastung die dämpfenden Eigenschaften des Federwerkstoffs voll ausgenutzt werden können und somit eine deutliche Hysterese festzustellen ist. Über die Formgebung der Mittenausnehmung kann zugleich auch ein Teilbereich der angrenzenden Stirnfläche mitgeformt werden, so daß auch hierüber Einfluß auf den Verlauf der Federkennlinie genommen werden kann.

Der Begriff "Endform" bezeichnet diejenige durch bleibende Verformung gewonnene Form des Federelementes, die sich nach dem Entlasten der Preßwerkzeuge ergibt, die jedoch in ihrer wesentlichen Kontur durch die Form der Preßwerkzeuge vorgegeben ist. Da bei diesem Verfahren sowohl die Mittenausnehmung als auch die Stirnflächen in ihrer Kontur gezielt geformt werden können, ist es auch möglich, beide Stirnflächen und die daran anschließenden Flächen der Mittenausnehmung unterschiedlich zu formen und so an die jeweiligen Anforderungen anzupassen und auch mehrere Ausnehmungen über die Stirnflächen einzuformen, die nicht zwangsläufig in der Mittelachse oder symmetrisch hierzu verlaufen müssen. Auch wenn nur eine Ausnehmung vorgesehen ist, kann diese in bezug auf die Stirnfläche asymmetrisch bzw. außermittig angeordnet sein.

Der Grundkörper wird durch thermoplastische Verformung aus einem kopolymeren Polyester-Elastomer hergestellt. Dies kann durch Gießen, Spritzgießen, Extrudieren oder dergleichen hergestellt werden. Die Umformung nach dem erfindungsgemäßen Verfahren erfolgt ohne zusätzliche Wärmezufuhr.

Da über die Formung der Mittenausnehmung auch die Stirnfläche mitgeformt werden kann, ist in einer Ausgestaltung der Erfindung vorgesehen, daß die Mittenausnehmung nur von einer Stirnfläche her geformt wird und in einer anderen Ausgestaltung, daß die Mittenausnehmung von beiden Seiten her geformt wird. Damit ist eine im Axialschnitt unsymmetrische Formgebung sowohl der Stirnflächen als auch der Mittenausnehmung möglich.

Die Mittenausnehmung kann nun nahezu vollständig durchgeformt werden. Es ist aber auch möglich, die Mittenausnehmung in axialer Richtung nicht vollständig durchzuformen, so daß zwischen der dann entstehenden Vertiefung in einer oder auch in beiden Stirnflächen ein Materialrest verbleibt. Dieser Materialrest kann nun je nach Einsatzzweck der Feder erhalten bleiben oder aber anschließend beispielsweise durch Bohren oder Stanzen vollständig entfernt werden, so daß auch über diese Maßnahme Einfluß auf die Federcharakteristik genommen werden kann.

In besonders vorteilhafter Ausgestaltung der Erfindung ist vorgesehen, daß beim Formen der Stirnflächen das Material gegen den die Mittenausnehmung formenden Teil des Preßwerkzeugs gedrückt wird. Hierdurch lassen sich praktisch beliebige Längskonturen der Mittenausnehmung formen.

Besonders vorteilhaft ist es, wenn der Grundkörper scheibenförmig ausgebildet ist, wobei die Breite in etwa der Scheibendicke, d. h. im Abstand der beiden Stirnflächen zueinander entspricht. Durch eine derartige Formgebung ist gewährleistet, daß das hergestellte Federelement bei einer Belastung über die beiden Stirnflächen nicht seitlich ausknicken kann.

Der Grundkörper kann im Prinzip eine beliebige Umfangskontur aufweisen, so beispielsweise quadratisch, rechteckig oder oval sein. Besonders zweckmäßig ist es jedoch, wenn der Grundkörper, bezogen auf die Mittenachse, eine Kreisform aufweist.

In weiterer vorteilhafter Ausgestaltung des erfindungsgemäßen Verfahrens ist vorgesehen, daß über wenigstens ein den Außenumfang des Grundkörpers umgreifendes Formwerkzeug durch den auf den Bereich der Mittenausnehmung und/oder den Bereich der Stirnflächen einwirkenden Verformungsdruck die Umfangsfläche des Grundkörpers geformt wird. Wird das Formwerkzeug als "verlorenes" Werkzeug, beispielsweise in Form von Kreisringscheiben bei einem zylindrischen Grundkörper, eingesetzt, so daß es in den Federkörper eingeformt bleibt, lassen sich auch in einem Preßschritt lange Federelemente herstellen, da während des Preßvorganges der Grundkörper durch die Formwerkzeuge gegen seitliches Ausknicken geführt werden kann. Die dann mit dem Federkörper formschlüssig verbundenen Kreisringscheiben dienen später als Führungselemente, die ein Ausknicken des Federkörpers in Verbindung mit einem Führungsteil verhindern. Da auch die Mittenausnehmung beim Preßvorgang geformt wird, wird auch fortlaufend Material radial nach außen gedrückt.

Die Erfindung wird anhand schematischer Zeichnungen näher erläutert. Es zeigen:
- Fig. 3: das erfindungsgemäße Verfahren in einzelnen Verfahrensschritten,
- Fig. 4: eine Abwandlung des erfindungsgemäßen Verfahrens,
- Fig. 5: unterschiedliche Ausführungsformen von Federelementen nach der Erfindung,
- Fig. 6: eine Federkennlinie eines erfindungsgemäßen Federelementes.

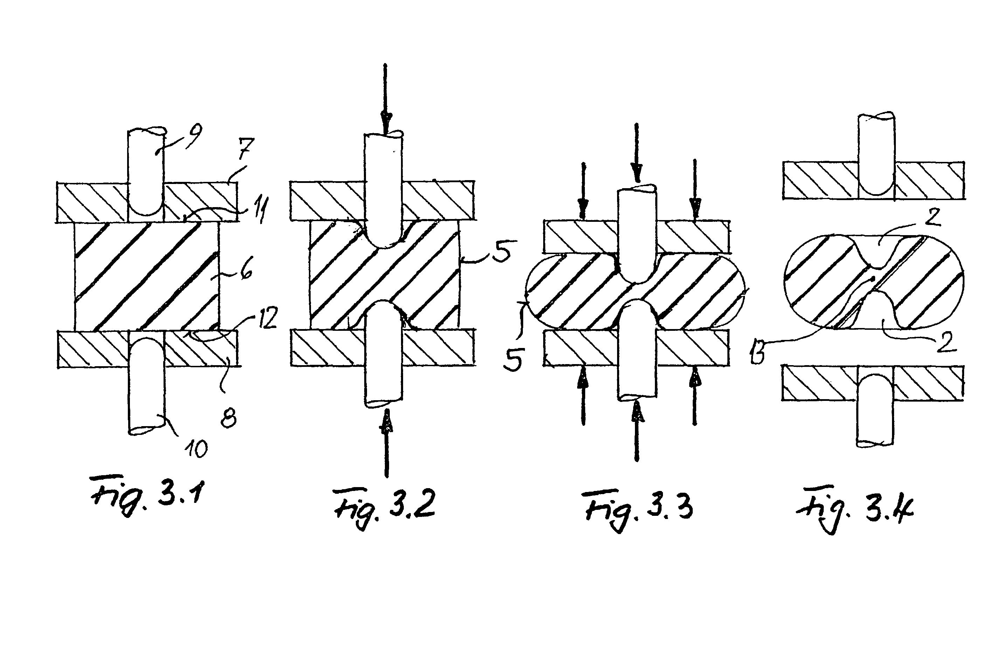

Bei dem in den Fig. 3.1 bis 3.4 dargestellten erfindungsgemäßen Verfahren wird als Grundkörper ein ungebohrter, beispielsweise zylindrischer Block 6 aus einem thermoplastischen kopolymeren Polyester-Elastomer über zwei flächige Preßwerkzeuge 7 und 8 mit Druck beaufschlagt. In der hier dargestellten vereinfachten Form sind die beiden im wesentlichen plattenförmig ausgebildeten Preßwerkzeuge 7 und 8 im Mittenbereich mit gesondert bewegbaren Formstempeln 9, 10 versehen, so daß entsprechend Fig. 3.1 der Block 6 zunächst über die Preßwerkzeuge 7, 8 praktisch drucklos gehalten wird.

Bei Druckbeaufschlagung der beiden Formstempel 9 und 10 dringen diese unter gleichzeitiger Verdrängung des Materials in den Bereich der Stirnflächen 11, 12 und der Umfangsfläche 5 des Blocks 6 in diesen ein, wie Fig. 3.2 zeigt. Sobald die Formstempel 9, 10 eine vorgegebene Eindringtiefe erreicht haben, werden die Preßwerkzeuge 7 und 8 mit Druck beaufschlagt und der Block 6 insgesamt zusammengedrückt, so daß die Umfangsfläche 5 entsprechend stark nach außen ausgebaucht wird, wie dies in Fig. 3.3 dargestellt ist. Bei der Druckbeaufschlagung der Preßwerkzeuge 7, 8 können die Formstempel 9, 10 entweder in der in Fig. 3.2 gezeigten Eindringtiefe gehalten werden, oder aber, wie Fig. 3.3 erkennen läßt, zusammen mit den Preßwerkzeugen 7, 8 noch bis in die Endstellung weitergeführt werden.

Werden, wie Fig. 3.4 zeigt, die Preßwerkzeuge und die Preßstempel entlastet und zurückgefahren, dann federt das so erzeugte Formteil um ein gewisses Maß in die gewünschte Endform. Soll das so erzeugte Federelement einzeln verwendet werden, dann ist es nicht erforderlich, den verbleibenden Zwischensteg 13 zu entfernen. In der Regel werden jedoch derartige Federelemente als Stapel zusammengeschaltet und zwar in der Weise, daß eine zentrale Führungsstange und zwischen den einzelnen Federelementen Führungs- und Stützplatten vorgesehen sind, die auf der Führungsstange längsverschiebbar gehalten sind. Zu diesem Einsatzzweck muß der Zwischensteg 13 beispielsweise durch Ausbohren und Ausstanzen entfernt werden.

Die Verwendung von Preßwerkzeugen 7, 8 und Preßstempeln 9, 10, die unabhängig voneinander bewegbar sind, eignet sich vor allem bei Blöcken, die eine gegenüber dem Durchmesser größere Höhe aufweisen, da dann der Block zunächst zwischen den Preßwerkzeugen 7, 8 mit nur geringem Druck fixiert werden kann, die auch ggf. mit fortschreitender Formgebung der Mittenausnehmung nachgeführt werden können. Ein seitliches Ausknicken des Blocks wird durch die immer weiter eindringenden Preßstempel 9, 10 verhindert. Bei eher scheibenförmigen Blökken können die Preßstempel 9, 10 in vorgegebener Eindringlänge jeweils fest mit dem zugehörigen Preßwerkzeug 7, 8 verbunden sein, so daß bei der Bewegung derart kombinierter Preßwerkzeuge zunächst ein Teil der Mittenausnehmung und dann die Stirnflächen 11, 12 und die Mittenausnehmung gleichzeitig bis zum Erreichen der Preßendstellung geformt werden. Es ist aber auch möglich, den Block zunächst über die Preßwerkzeuge 7, 8 zu verformen und diese in Preßstellung zu halten und anschließend die Mittenausnehmung über die Preßstempel 9, 10 zu formen.

Da durch die Formstempel 9 und 10 einerseits das Material des Blocks 6 nach außen gedrückt wird, daß aber durch die auf die Stirnflächen 11 und 12 einwirkenden Preßwerkzeuge 7 und 8 noch vor vollständiger Ausführung der Mittenausnehmung das Material des Blocks 6 auch in axialer Richtung gepreßt wird und somit die Tendenz hat, nicht nur nach außen auszuweichen sondern auch nach innen gegen die Formstempel 9 und 10 gepreßt zu werden, ergibt sich eine über den Querschnitt etwa gleichmäßige Verpressung des elastomeren Materials.

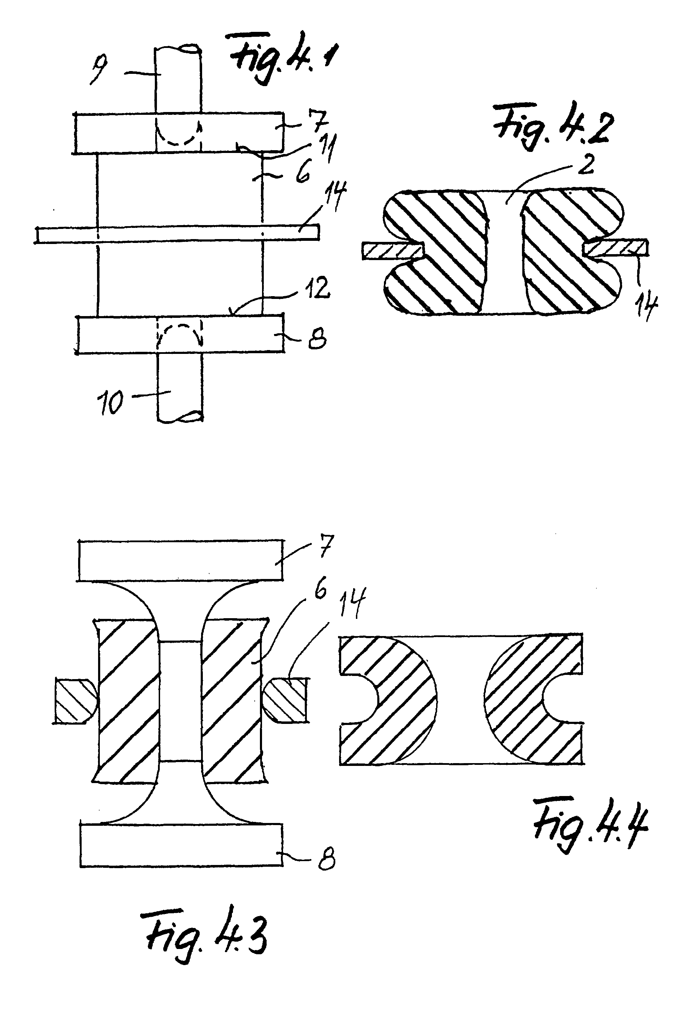

In Fig. 4.1 ist eine abgewandelte Verfahrensweise dargestellt. Das Grundverfahren entspricht dem Verfahren gem. Fig. 3, so daß gleiche Bauelemente durch gleiche Bezugszeichen gekennzeichnet sind und hinsichtlich des Verfahrensablaufs auf die Beschreibung zu Fig. 3 verwiesen werden kann. Fig. 4.2 zeigt im Schnitt das fertige Federelement.

Die Abwandlung gegenüber dem Verfahren gem. Fig. 3 besteht darin, daß vor dem Einwirken der Preßkraft auf die Stirnflächen 11 und 12, sei es durch die Formstempel 9, 10 oder durch die Preßwerkzeuge 7, 8, um den Mittenbereich der Außenumfangsfläche 5 ein zusätzliches Formwerkzeug 14 herumgelegt wird, das entweder wenigstens zweiteilig ausgebildet und Teil der Preßvorrichtung ist, oder das als "verlorenes Formwerkzeug" in Form eines Kreisringes aus Blech oder anderen Werkstoffen in dieser Positionierung gehalten wird. Anschließend wird, wie anhand von Fig. 3 beschrieben, durch die Preßwerkzeuge und Formstempel die Verformung vorgenommen, so daß das Formwerkzeug 14 in das zu bildende Federelement eine entsprechende Nut einformt.

Wird das Formwerkzeug 14 als "verlorenes Formwerkzeug" eingesetzt, dann bildet die eingeformte Kreisringscheibe 14 zugleich einen Führungsring für das fertige Druckfederelement, was insbesondere bei dem Aufbau einer in einem Teleskoprohr angeordneten Druckfeder aus mehreren derartigen, übereinander angeordneten Einzelfedern interessant ist. Da bei einem "verlorenen Formwerkzeug" mehrere derartiger Kreisringscheiben mit Abstand zueinander angeordnet werden können, läßt sich bei entsprechender Nachführung der Kreisrringscheiben während des Verformungsvorganges ein "langes" Federelement herstellen, da über die Kreisringscheiben ein seitliches Ausknicken verhindert wird.

Wie Fig. 4.3 zeigt, ist es aber auch möglich, ein geteiltes Formwerkzeug 14 vorzusehen, durch das die Außenumfangsfläche 5 gezielt geformt wird. In Verbindung mit entsprechend geformten Preßstempeln 9, 10 bzw. Preßwerkzeugen 7, 8 lassen sich Federelemente herstellen, die eine trichterförmige bzw. doppelt trichterförmige Form aufweisen, wie dies in Fig. 4.4 gezeigt ist.

In den Zeichnungen sind die Preßwerkzeuge 7, 8 ebenflächig und die Preßstempel 9, 10 im wesentlichen zylindrisch dargestellt. Die den Stirnflächen 11, 12 des Blocks 6 zugekehrten Flächen und die Preßstempel 9, 10 können jedoch entsprechend den Anforderungen an das herzustellende Federelement auch entsprechend konturiert werden. Durch eine entsprechende Konturierung dieser Flächen der Preßwerkzeuge 7, 8 lassen sich nicht nur die Stirnflächen 11 und 12 formen, sondern läßt sich auch Material in den Bereich der Mittenausnehmung gegen die Formstempel 9 und 10 führen, so daß auch auf die Verdichtung Einfluß genommen werden kann. Ebenso kann über eine entsprechende Konturierung der Preßstempel 9, 10 Material in den Umfangsbereich an den Preßwerkzeugen 7, 8 führen.

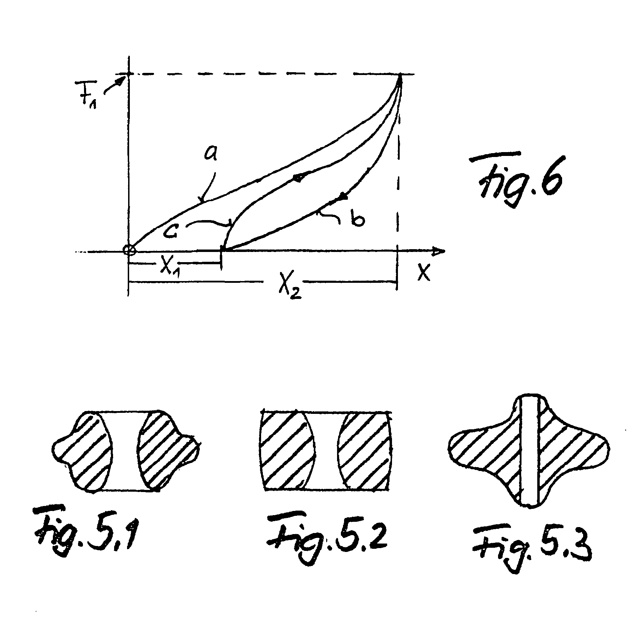

In Fig. 5 sind drei unterschiedliche Konturen 5.1, 5.2 und 5.3 als Ausführungsbeispiele dargestellt.

In Abwandlung zu dem anhand von Fig. 3 oder 4 beschriebenen Verfahren kann es zweckmäßig sein, einen oder beide bewegbaren Formstempel 9, 10 hohl auszuführen, so daß die Verdichtungswirkung der Preßwerkzeuge 7 und 8 durch die Außenfläche dieser Formstempel eine entsprechende Gegenformfläche findet, gleichzeitig aber das Material für die Mittenausnehmung schon während des Verdichtungsvorganges ganz oder teilweise ausgestanzt wird.

Es ist ohne weiteres zu erkennen, daß mit dem erfindungsgemäßen Verfahren auch die Möglichkeit besteht, elastomere Federelemente herzustellen, die auch mehrere Ausnehmungen aufweisen, über die es dann möglich ist, die Federcharakteristik eines derartigen Federelementes zu beeinflussen.

Wie aus der Beschreibung der verschiedenen Formgebungsverfahren gemäß der Erfindung zu ersehen, erlaubt das erfindungsgemäße Verfahren auch eine Verfahrensweise, bei der der umzuformende Block 6 bereits eine vorgefertigte Mittenausnehmung aufweist, beispielsweise in Form einer zylindrischen Bohrung, die jedoch vorteilhafterweise einen geringeren Durchmesser aufweist als der Durchmesser der fertig geformten Mittenausnehmung. Bei diesem Verfahren wird das Eindringen der die Mittenausnehmung formenden Preßstempel 9 und 10 erleichtert, da eine geringere Verdrängungsarbeit zu leisten ist. Ein weiterer Vorteil besteht darin, daß durch eine entsprechende Abstimmung des (kleineren) Durchmessers der vorgeformten Mittenausnehmung einerseits und des (größeren) Durchmessers der Preßstempel 9, 10 andererseits, der Verformungsgrad des Materialvolumens im Bereich der Mittenausnehmung sehr genau vorgegeben werden kann und somit eine übermäßige Verdichtung des Materials in diesem Bereich, der die Rückstellkräfte beeinträchtigen könnte, vermieden wird. Dieses Verfahren ist insbesondere zur Herstellung von Federkörpern mit der in Fig. 4.4 als Beispiel gezeigten Form vorteilhaft.

In Fig. 6 ist schematisch die Federkennlinie eines Federelementes dargestellt, das nach dem erfindungsgemäßen Verfahren hergestellt ist. Bei der Herstellung aus einem Block aus thermoplastischem kopolymeren Polyester-Elastomer ergibt sich für die Preßwerkzeuge ein Kraftverlauf über den Weg X₂ entsprechend der Kurve a). Wird das aus dem Block durch druckplastische Verformung mit der Kraft F₁ um das Maß X₂ zusammengedrückte, fertig geformte Federelement entlastet, entspannt sich das Federelement nach der Kurve b), wobei sich die ursprüngliche Länge des Blocks um das Maß X₁ verkürzt. Wird das fertige Federelement dann im Einsatz bis zu einer Auflast in der Größe von F₁ belastet, ergibt sich ein Kraft-Weg-Verlauf gemäß der Kurve c) und bei einer Entlastung wiederum nach der Kurve b). Der Federweg bei elastischer Verformung entspricht somit der Strecke X₂ - X₁.

Die erkennbare Hysterese zwischen Belastung und Entlastung zeigt, daß durch ein derartiges Federelement ein entsprechend hoher Energieverzehr erfolgt, also eine entsprechende Dämpfung vorhanden ist. Damit sind derartige Federelemente zur Herstellern von Puffern, beispielsweise Puffern für Schienenfahrzeuge, einsetzbar, da nach der Stoßbelastung infolge des Energieverzehrs die Rückstellkraft der Federelemente den Puffer nur verzögert in seine Ausgangsstellung zurückführt und damit ein Rückprallen des stoßenden Fahrzeugs praktisch vermieden ist.

Fig. 6 läßt einen weiteren Vorteil von Federelementen erkennen, die nach dem erfindungsgemäßen Verfahren hergestellt sind. Wird im Betrieb ein Federelement beispielsweise in der Form gemäß Fig. 3.4 oder 5.2 innerhalb gewisser Grenzen mit einer größeren Kraft als F₁ belastet, dann erfolgt eine entsprechende dauernde Verformung, die jedoch nicht zu einer Zerstörung des Federelementes sondern zu einer stärkeren Umformung führt. Dies hat dann auch "nur" zur Folge, daß das so überlastete Federelement eine entsprechend höhere Federsteifigkeit ausweist, seine für den Einsatzfall vorgesehene Federcharakteristik im wesentlichen jedoch beibehält. Damit verbleibt immer noch eine "Notfedereigenschaft

In der einfachsten Ausführung ist wenigstens eines der die Stirnflächen formenden Preßwerkzeuge konvex geformt, so daß die Stirnfläche der Endform eine schüsselartig vertiefte Gestalt aufweist. Ein derartiges blockförmiges Federelement weist auch ohne Mittenausnehmung eine Federkennlinie auf, die zunächst sehr flach verläuft und dann stark progressiv ansteigt. Über die Tiefe der schüsselartigen Vertiefung und die Breite des die Vertiefung begrenzenden Randes läßt sich die Länge des "weichen" Federweges gezielt gestalten.

Die Formgebung mit einer schüsselartigen Vertiefung, d. h. mit einem den wesentlichen Teil der Stirnfläche überragenden umlaufenden Rand, läßt sich bei Federelementen mit wenigstens einer Mittenausnehmung mit Vorteil anwenden.

Die Formgebung kann hierbei so gewählt werden, daß nur eine Stirnfläche schüsselartig vertieft geformt wird, während die andere Stirnfläche ebenflächig geformt ist. Ebenso können beide Stirnflächen schüsselartig vertieft ausgeführt werden. In gleicher Weise können die Stirnflächen kalottenartig vorgewölbt ausgebildet sein.

## Patentansprüche

1. Verfahren zur Herstellung von elastomeren Federelementen mit wenigstens einer Mittenausnehmung (2) durch Druckumformung eines Grundkörpers (6) aus einem thermoplastischen kopolymeren Polyester-Elastomer, bei dem durch den Druck zwischen zwei gegeneinander gerichteten Preßwerkzeugen (7, 8) und wenigstens einem mit den Preßwerkzeugen (7, 8) zusammenwirkenden Formstempel (9, 10) für die Mittenausnehmung, die auf zwei gegenüberliegende Stirnflächen (11, 12) des Grundkörpers (6) einwirken, der Grundkörper (6) in eine vorgegebene Endform verdichtend umgeformt wird, wobei zumindest die Stirnflächen (11, 12) und die Mittenausnehmung (2) und/oder die die Mittenausnehmung (2) begrenzenden Stirnflächen (11, 12) durch eine gezielte, umformende Formgebung des Grundkörpers geformt werden.

2. Verfahren nach Anspruch 1, **dadurch gekennzeichnet, daß** die Mittenausnehmung (2) nur von einer Stirnfläche (11, 12) her geformt wird.

3. Verfahren nach Anspruch 1, **dadurch gekennzeichnet, daß** die Mittenausnehmung (2) von beiden Stirnflächen (11, 12) her geformt wird.

4. Verfahren nach einem der Ansprüche 1 bis 3, **dadurch gekennzeichnet, daß** die Mittenausnehmung (2) nicht vollständig durchgeformt wird, so daß ein Reststeg (13) verbleibt.

5. Verfahren nach einem der Ansprüche 1 bis 4, **dadurch gekennzeichnet, daß** beim Formen der Stirnflächen (11, 12) das zu verformende Material gegen den die Mittenausnehmung (2) formenden Preßstempel (9, 10) des Preßwerkzeuges (7, 8) gedrückt wird.

6. Verfahren nach einem der Ansprüche 1 bis 5, **dadurch gekennzeichnet, daß** ein Grundkörper (6) mit einem, bezogen auf die Achse der Mittenausnehmung (2), Kreisquerschnitt verwendet wird.

7. Verfahren nach einem der Ansprüche 1 bis 6, **dadurch gekennzeichnet, daß** über wenigstens ein den Außenumfang des Grundkörpers (6) umgreifendes Formwerkzeug (14) durch den Preßdruck die Umformung (5) geformt wird.

8. Verfahren nach einem der Ansprüche 1 bis 7, **dadurch gekennzeichnet, daß** ein Grundkörper (6) mit einer vorgeformten Mittenausnehmung (2) verwendet wird.

9. verfahren nach Anspruch 8, **dadurch gekennzeichnet, daß** die vorgeformte Mittenausnehmung (2) in ihrer Form und/oder in ihren Abmessungen höchstens gleich der Form und/oder den Abmessungen der Endform entspricht.

10. Verfahren nach einem der Ansprüche 1 bis 9, **dadurch gekennzeichnet, daß** wenigstens eine Stirnflächen (11, 12) gegenüber dem durch die Umfangsfläche (5) definierten Rand schüsselartig und/oder kalottenförmig vorgewölbt geformt wird.

## Claims

1. A process for the production of elastomeric spring elements having at least one central cutout (2) by pressure-forming of a basic body (6) made of a thermoplastic copolymeric polyester elastomer, in which by means of the pressure between two pressing tools (7, 8) directed towards one another and at least one punch (9, 10) for the central cutout which cooperates with the pressing tools (7, 8), all of which act on two opposing end faces (11, 12) of the basic body (6), the basic body (6) is formed by compression into a predetermined final form, at least the end faces (11, 12) and the central cutout (2) and/or the end faces (11, 12) defining the central cutout (2) being formed by specific shaping of the basic body.

2. A process according to Claim 1, **characterised in that** the central cutout (2) is formed only from one end face (11, 12).

3. A process according to Claim 1, **characterised in that** the central cutout (2) is formed from both end faces (11, 12).

4. A process according to one of Claims 1 to 3, **characterised in that** the central cutout (2) is not formed completely through, so that a residual crosspiece (13) remains.

5. A process according to one of Claims 1 to 4, **characterised in that** when shaping the end faces (11, 12) the material to be deformed is pressed against the punch (9, 10) of the pressing tool (7, 8) which forms the central cutout (2).

6. A process according to one of Claims 1 to 5, **characterised in that** a basic body (6) having a circular cross-section relative to the axis of the central cutout (2) is used.

7. A process according to one of Claims 1 to 6, **characterised in that** the deformation (5) is formed by the moulding pressure via at least one moulding tool (14) which passes around the outer periphery of the basic body (6).

8. A process according to one of Claims 1 to 7, **characterised in that** a basic body (6) with a preformed central cutout (2) is used.

9. A process according to Claim 8, **characterised in that** the preformed central cutout (2) corresponds in form and/or dimensions at most identically to the form and/or dimensions of the final form.

10. A process according to one of Claims 1 to 9, **characterised in that** at least one end face (11, 12) is formed bulging in dish-like and/or cup-like manner relative to the edge defined by the peripheral surface (5).

## Revendications

1. Procédé de fabrication d'éléments élastiques élastomères présentant au moins un évidement central (2) par déformation par pression d'un corps de base (6) en élastomère de polyester copolymère thermoplastique, dans lequel le corps de base (6) est déformé par compression dans une forme finale prédéterminée par la pression entre deux outils de pressage (7, 8) orientés l'un contre l'autre et au moins un poinçon de formage (9, 10) coopérant avec les outils de pressage (7, 8) pour l'évidement central, qui agissent sur deux surfaces frontales (11, 12) du corps de base (6) situées l'une en face de l'autre, au moins les surfaces frontales (11, 12) et l'évidement central (2) et/ou les surfaces frontales (11, 12) délimitant l'évidement central (2) étant formées par une mise en forme déformant de manière spécifique le corps de base.

2. Procédé selon la revendication 1, **caractérisé en ce que** l'évidement central (2) n'est formé qu'à partir d'une surface frontale (11, 12).

3. Procédé selon la revendication 1, **caractérisé en ce que** l'évidement central (2) est formé à partir des deux surfaces frontales (11, 12).

4. Procédé selon l'une quelconque des revendications 1 à 3, **caractérisé en ce que** l'évidement central (2) n'est pas formé complètement, de telle sorte qu'il reste une nervure résiduelle (13).

5. Procédé selon l'une quelconque des revendications 1 à 4, **caractérisé en ce que** lors de la mise en forme des surfaces frontales (11, 12) le matériau à mettre en forme est poussé contre le poinçon de pressage (9, 10) de l'outil de pressage (7, 8), qui forme l'évidement central (2).

6. Procédé selon l'une quelconque des revendications 1 à 5, **caractérisé en ce qu'**on utilise un corps de base (6) avec une section circulaire par rapport à l'axe de l'évidement central (2).

7. Procédé selon l'une quelconque des revendications 1 à 6, **caractérisé en ce que** la mise en forme (5) s'effectue par une pression de moulage à l'aide d'au moins un outil de formage (14) engagé autour de la périphérie extérieure du corps de base (6).

8. Procédé selon l'une quelconque des revendications 1 à 7, **caractérisé en ce qu'**on utilise un corps de base (6) avec un évidement central (2) préformé.

9. Procédé selon la revendication 8, **caractérisé en ce que** l'évidement central (2) préformé correspond dans sa forme et/ou dans ses dimensions au maximum à la forme et/ou aux dimensions de la forme finale.

10. Procédé selon l'une quelconque des revendications 1 à 9, **caractérisé en ce qu'**au moins une surface frontale (11, 12) est formée bombée en bol et/ou en calotte par rapport au bord défini par les surfaces périphériques (5).
